# EUROPÄISCHE PATENTANMELDUNG

(11) **EP 1 160 472 A2**
(43) Veröffentlichungstag der Anmeldung: **05.12.2001**
(21) Anmeldenummer: 01113025.9
(22) Anmeldetag: 28.05.2001
(51) Int. Cl.: F16D 1/12

(54) **Vorrichtung zum Einstellen von Drehwinkellagen**

(30) Priorität: 29.05.2000 DE 10026673
(71) Anmelder: Albert Klopfer GmbH, 71272 Renningen (DE)
(72) Erfinder: Klopfer, Otto, 71272 Renningen (DE)
(74) Vertreter: Manitz, Finsterwald & Partner GbR

(57) **Zusammenfassung**

Stirnverzahnungen zwischen dem zweiten Einstellelement und dem dritten Einstellelement eine andere Teilung aufweisen als die Teilung der Stirnverzahnungen zwischen dem ersten Einstellelement und dem zweiten Einstellelement, und wobei Mittel vorgesehen sind zum Ineingriff- und Außereingriffbringen sowie zum Gegeneinanderverdrehen des zweiten Einstellelementes und des dritten Einstellelementes alternativ und gegensinnig zum ersten Einstellelement und zweiten Einstellelement.

## Beschreibung

Die vorliegende Erfindung betrifft eine Vorrichtung zum Einstellen von Drehwinkellagen, insbesondere Indexiereinrichtung für Werkzeugmaschinen, mit einem ersten um eine zentrale Achse verdrehbaren, insbesondere scheibenförmigen Einstellelement, welches auf seiner einen Seite mit einer ringförmig um die zentrale Achse verlaufenden Stirnverzahnung versehen ist, und einem zweiten um dieselbe zentrale Achse verdrehbaren, insbesondere scheibenförmigen Einstellelement, welches auf der Verzahnungsseite des ersten Einstellelementes angeordnet ist und auf seiner dem ersten Einstellelement zugewandten Seite ebenfalls mit einer ringförmig um die zentrale Achse verlaufenden, mit der Stirnverzahnung des ersten Einstellelementes identischen Stirnverzahnung versehen ist, sowie Mitteln zum axialen Ineingriffbringen und Außereingriffbringen der Stirnverzahnungen der beiden Einstellelemente und Mitteln zum Verdrehen der beiden Einstellelemente in Außereingriffstellung gegeneinander um ihre gemeinsame zentrale Achse.

Derartige Indexiereinrichtungen sind seit langem bekannt. Sie dienen beispielsweise dazu, in Werkzeugmaschinen eingespannte Werkstücke zwischen verschiedenen Bearbeitungspositionen zu verdrehen. Um eine hohe Genauigkeit der Bearbeitung zu erreichen, müssen die einstellbaren Drehwinkellagen ebenfalls eine hohe Genauigkeit aufweisen. Hierfür müssen die Stirnverzahnungen entsprechend genau gefertigt werden. Darüber hinaus müssen die Stirnverzahnungen eine ausreichende Festigkeit aufweisen, um einen vorzeitigen Verschleiß der Indexiereinrichtung zu vermeiden.

Je nach Anzahl der Zähnezahl kann mit den bekannten Indexiereinrichtungen eine mehr oder wenige feine Teilung der einstellbaren Drehwinkellagen erreicht werden. Bei 360 Zähnen beträgt die Teilung beispielsweise 1°. Die Teilung kann dabei nicht beliebig verfeinert werden, da die Zähnezahl durch den zur Verfügung stehenden Platz und die Festigkeitsanforderungen begrenzt ist. Je feiner die Teilung, desto höher sind außerdem die Kosten für die Herstellung einer solchen Indexiereinrichtung.

Der Erfindung liegt die Aufgabe zugrunde, eine Indexiereinrichtung der eingangs genannten Art anzugeben, die bei verhältnismäßig geringen Herstellungskosten eine feinere Teilung der einstellbaren Winkellagen ermöglicht.

Diese Aufgabe wird dadurch gelöst, daß auf der dem ersten Einstellelement abgewandten Seite des zweiten Einstellelementes ein drittes, insbesondere scheibenförmiges, um dieselbe zentrale Achse verdrehbares Einstellelement vorgesehen ist, welches auf seiner dem zweiten Einstellelement zugewandten Seite mit einer ringförmigen, um die zentrale Achse verlaufenden Stirnverzahnung versehen ist, daß das zweite Einstellelement auf seiner dem dritten Einstellelement zugewandten Seite mit einer zweiten ringförmig um die zentrale Achse verlaufenden Stirnverzahnung versehen ist, die mit der Stirnverzahnung des dritten Einstellelementes identisch ist, wobei die Stirnverzahnungen zwischen dem zweiten Einstellelement und dem dritten Einstellelement eine andere Teilung aufweisen als die Teilung der Stirnverzahnungen zwischen dem ersten Einstellelement und dem zweiten Einstellelement, und daß Mittel vorgesehen sind zum Ineingriff- und Außereingriffbringen sowie zum Gegeneinanderverdrehen des zweiten Einstellelementes und des dritten Einstellelementes alternativ und gegensinnig zum ersten Einstellelement und zweiten Einstellelement.

Durch das zweite Paar Stirnverzahnungen und die gegensinnige Verdrehung dieses zweiten Paares gegenüber dem ersten Paar ist eine besonders feine Teilung möglich. Beträgt beispielsweise die Teilung des ersten Paares 2,5° und die Teilung des zweiten Paares 2,4°, was Zähnezahlen von 144 und 150 entspricht, so ergibt sich eine Teilung von 0,1°. Wird nämlich das erste Paar um einen Zahn gegeneinander in der einen Richtung und anschließend das zweite Paar ebenfalls um einen Zahn in der umgekehrten Richtung gegeneinander verdreht, so ergibt sich eine resultierende Verdrehung zwischen dem ersten und dem dritten Einstellelement von nur 0,1°. Entsprechend können durch aufeinanderfolgendes, entgegengesetztes Verdrehen des ersten und des zweiten Verzahnungspaares beliebige Winkellagen in Schritten von 0,1° eingestellt werden.

Eine derart geringe Teilung ist mit bekannten Indexiereinrichtungen nicht erreichbar. Es müßten nämlich hierfür 3600 Zähne vorgesehen werden, was aufgrund der üblichen Platzverhältnisse nicht möglich ist. Aber auch bei weniger feiner Teilung hat die erfindungsgemäße Vorrichtung den Vorteil, daß sie gegenüber bekannten Indexiereinrichtungen deutlich günstiger in der Herstellung ist und zudem eine höhere Verschleißfestigkeit aufweist, da die erforderlichen Zähnezahlen der beiden Verzahnungspaare jeweils vergleichsweise niedrig sind.

Das Verhältnis der Zähnezahlen zwischen den beiden Verzahnungspaaren kann grundsätzlich beliebig gewählt werden. Bevorzugt ist es, wenn sich die Zähnezahlen nur geringfügig voneinander unterscheiden. Auf diese Weise können kleine Teilungen erreicht werden.

Ebenfalls bevorzugt ist es, wenn das Verhältnis der Zähnezahlen so gewählt ist, daß sich bei gegensinnigem Verdrehen der beiden Verzahnungspaare stets ein resultierender Drehwinkel ergibt, der als ganzzahliger Bruch darstellbar ist. Die Verwendung der erfindungsgemäßen Indexiereinrichtung ist dadurch vereinfacht.

Beispielsweise kann, wie bereits ausgeführt, das eine Paar Stirnverzahnungen 150 Zähne und das andere Paar 144 Zähne aufweisen. Durch gegensinniges Verdrehen der beiden Verzahnungspaare ergibt sich dadurch eine Teilung von 1/10°. Es wird also eine sehr feine Teilung erreicht, die eine einfache Handhabung erlaubt.

Nach einer weiteren Ausgestaltung der Erfindung sind Mittel vorgesehen, durch welche wahlweise eines der drei Einstellelemente gegen ein Verdrehen arretierbar ist. Damit sind beim Einsatz der erfindungsgemäßen Vorrichtung zusätzliche Variationsmöglichkeiten gegeben.

Bevorzugt umfaßt die erfindungsgemäße Vorrichtung Mittel zum Einstellen einer Drehwinkellage durch Verdrehen eines Paares von Stirnverzahnungen gegeneinander in der einen Richtung und anschließendes Verdrehen des anderen Paares von Stirnverzahnungen gegeneinander in entgegengesetzter Richtung. Damit kann ein Verfahren zur Einstellung von Drehwinkellagen mit sehr kleiner Teilung realisiert werden.

Ausführungsbeispiele der Erfindung sind in der Zeichnung dargestellt und werden nachfolgend beschrieben, es zeigen, jeweils in schematischer Darstellung:
- Figur 1: einen Querschnitt durch eine erfindungsgemäße Vorrichtung und
- Figur 2: eine Darstellung der Bewegung einer erfindungsgemäßen Vorrichtung.

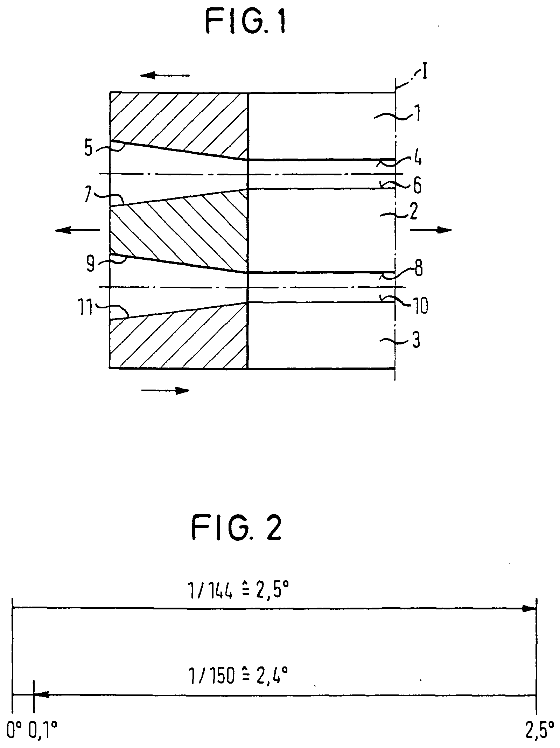

Die in Figur 1 dargestellte Vorrichtung ist spiegelsymmetrisch zu der senkrecht zur Blattebene verlaufenden, durch die Achse I gehenden Ebene. Sie umfaßt drei Einstellelemente 1, 2, 3, die als ringförmige Scheiben ausgebildet sind. Die drei Einstellelemente 1, 2, 3 sind um eine gemeinsame zentrale Achse I drehbar gelagert. Das erste Einstellelement 1 weist auf seiner dem zweiten Einstellelement 2 zugewandten Seite 4 eine Stirnverzahnung 5 auf, die ringförmig um die zentrale Achse I verläuft. Das zweite Einstellelement 2 weist auf seiner dem ersten Einstellelement 1 zugewandten Seite 6 eine Stirnverzahnung 7 auf, die ebenfalls ringförmig um die zentrale Achse I verläuft und mit der Stirnverzahnung 5 des ersten Einstellelementes 1 identisch ist.

Auf seiner dem dritten Einstellelement 3 zugewandten Seite 8 weist das zweite Einstellelement 2 eine zweite Stirnverzahnung 9 auf, die wiederum ringförmig um die zentrale Achse I verläuft. Mit dieser Stirnverzahnung 9 identisch ist dabei auf der dem zweiten Einstellelement 2 zugewandten Seite 10 des dritten Einstellelementes 3 eine weitere Stirnverzahnung 11 vorgesehen. Auch diese Stirnverzahnung 11 verläuft daher ringförmig um die zentrale Achse I. Die Zähnezahl des ersten Paares von Stirnverzahnungen 5, 7 ist dabei von der Zähnezahl des zweiten Paares von Stirnverzahnungen 9, 11 verschieden.

Die drei Einstellelemente 1, 2 und 3 sind in Richtung ihrer gemeinsamen zentralen Achse I derart gegeneinander verschiebbar, daß wahlweise das erste Paar von Stirnverzahnungen 5, 7 oder das zweite Paar von Stirnverzahnungen 9, 11 miteinander in Eingriff gebracht werden kann. Darüber hinaus sind Mittel vorgesehen, durch welche die Einstellelemente 1, 2 und 3 in beiden Richtungen um ihre gemeinsame zentrale Achse drehbar sind. Dabei könne zusätzlich Mittel vorgesehen sein, durch welche wahlweise eines der drei Einstellelemente 1, 2, 3 gegen ein Verdrehen um die zentrale Achse I blockiert werden kann. Es kann aber auch ein Einstellelement dauernd festgelegt sein, beispielsweise das dritte Einstellelement 3.

Zum Einstellen eines gewünschten Drehwinkels werden die drei Einstellelemente 1, 2, 3 abwechselnd gegeneinander verdreht. Und zwar werden dabei zunächst zwei Einstellelemente gegeneinander blockiert, indem ihre einander zugeordneten Stirnverzahnungen miteinander in Eingriff gebracht werden, beispielsweise das erste Einstellelement 1 und das zweite Einstellelement 2. Dann werden die beiden Einstellelemente 1, 2 gegen das dritte Einstellelement 3 um eine bestimmte Zähnezahl verdreht. Nun werden die Stirnverzahnungen 5, 7 des ersten Paares außer Eingriff und stattdessen die Stirnverzahnungen 9, 11 des zweiten Paares in Eingriff gebracht. Dadurch kann das erste Einstellelement 1 gegen das zweite und das dritte Einstellelement 2, 3 verdreht werden. Dies erfolgt erfindungsgemäß in umgekehrter Drehrichtung zu der zuerst vorgenommenen Verdrehung.

Um beispielsweise eine Verdrehung mit einer Teilung von 0,1° zu realisieren, wird eine Vorrichtung mit einem ersten Stirnverzahnungspaar 5, 7 mit jeweils 150 Zähnen und einem zweiten Stirnverzahnungspaar 9, 11 mit jeweils 144 Zähnen verwendet. Dies entspricht einer Teilung des ersten Stirnverzahnungspaares 5, 7 von 2,4° und des zweiten Stirnverzahnungspaares 9, 11 von 2,5°. Werden nun das erste und das zweite Einstellelement 1, 2 um einen Zahn, also 2,5°, gegen das dritte Einstellelement 3 in einer Richtung und anschließend das erste Einstellelement 1 gegen das zweite und dritte Einstellelement 2, 3 um einen Zahn, also 2,4°, in umgekehrter Richtung verdreht, so ergibt sich, wie in Figur 2 dargestellt, im Ergebnis eine Verdrehung von 0,1°. Entsprechend können Verdrehungen von 0,2°, 0,3° usw. realisiert werden. Ebenso können durch andere Zähnezahlen der beiden Stirnverzahnungspaare 5, 7 und 9, 11 andere Teilungen verwirklicht werden.

Mit der erfindungsgemäßen Indexiervorrichtung können also sehr feine Teilungen erreicht werden, ohne daß hohe Zähnezahlen erforderlich wären. Die Herstellung der erfindungsgemäßen Vorrichtung ist dadurch entsprechend kostengünstig und ihre Verschleißfestigkeit entsprechend hoch. Außerdem können Teilungen realisiert werden, die sonst nicht erreichbar wären.

### Bezugszeichenliste

- 1: erstes Einstellelement
- 2: zweites Einstellelement
- 3: drittes Einstellelement
- 4: Seite von 1
- 5: Stirnverzahnung
- 6: Seite von 2
- 7: Stirnverzahnung
- 8: Seite von 2
- 9: Stirnverzahnung
- 10: Seite von 3
- 11: Stirnverzahnung
- I: zentrale Achse

## Patentansprüche

1. Vorrichtung zum Einstellen von Drehwinkellagen, insbesondere Indexiereinrichtung für Werkzeugmaschinen, mit einem ersten um eine zentrale Achse (I) verdrehbaren, insbesondere scheibenförmigen Einstellelement (1), welches auf seiner einen Seite (4) mit einer ringförmig um die zentrale Achse (I) verlaufenden Stirnverzahnung (5) versehen ist, und einem zweiten um dieselbe zentrale Achse (I) verdrehbaren, insbesondere scheibenförmigen Einstellelement (2), welches auf der Verzahnungsseite (4) des ersten Einstellelementes (1) angeordnet ist und auf seiner dem ersten Einstellelement (1) zugewandten Seite (6) ebenfalls mit einer ringförmig um die zentrale Achse (I) verlaufenden, mit der Stirnverzahnung (5) des ersten Einstellelementes (1) identischen Stirnverzahnung (7) versehen ist, sowie Mitteln zum axialen Ineingriffbringen und Außereingriffbringen der Stirnverzahnungen (5, 7) der beiden Einstellelemente (1, 2) und Mitteln zum Verdrehen der beiden Einstellelemente (1, 2) in Auβereingriffstellung gegeneinander um ihre gemeinsame zentrale Achse (I),
**dadurch gekennzeichnet,**
**daß** auf der dem ersten Einstellelement (1) abgewandten Seite (8) des zweiten Einstellelementes (2) ein drittes, insbesondere scheibenförmiges, um dieselbe zentrale Achse (I) verdrehbares Einstellelement (3) vorgesehen ist, welches auf seiner dem zweiten Einstellelement (2) zugewandten Seite (10) mit einer ringförmigen, um die zentrale Achse (I) verlaufenden Stirnverzahnung (11) versehen ist, daß das zweite Einstellelement (2) auf seiner dem dritten Einstellelement (3) zugewandten Seite (8) mit einer zweiten ringförmig um die zentrale Achse (I) verlaufenden Stirnverzahnung (9) versehen ist, die mit der Stirnverzahnung (11) des dritten Einstellelementes (3) identisch ist, wobei die Stirnverzahnungen (9, 11) zwischen dem zweiten Einstellelement (2) und dem dritten Einstellelement (3) eine andere Teilung aufweisen als die Teilung der Stirnverzahnungen (5, 7) zwischen dem ersten Einstellelement (1) und dem zweiten Einstellelement (2), und daß Mittel vorgesehen sind zum Ineingriff- und Außereingriffbringen sowie zum Gegeneinanderverdrehen des zweiten Einstellelementes (2) und des dritten Einstellelementes (3) alternativ und gegensinnig zum ersten Einstellelement (1) und zweiten Einstellelement (2).

2. Vorrichtung nach Anspruch 1,
**dadurch gekennzeichnet,**
**daß** sich die Zähnezahlen der beiden Paare von Stirnverzahnungen (5, 7 und 9, 11) nur geringfügig voneinander unterscheiden.

3. Vorrichtung nach Anspruch 1 oder 2,
**dadurch gekennzeichnet,**
**daß** das Verhältnis der Zähnezahlen so gewählt ist, daß sich bei gegensinnigem Verdrehen der beiden Verzahnungspaare (5, 7 und 9, 11) stets ein resultierender Drehwinkel ergibt, der als ganzzahliger Bruch darstellbar ist.

4. Vorrichtung nach Anspruch 3,
**dadurch gekennzeichnet,**
**daß** das eine Paar Stirnverzahnungen (5, 7) 150 Zähne und das andere Paar (9, 11) 144 Zähne aufweist.

5. Vorrichtung nach einem der vorhergehenden Ansprüche,
**dadurch gekennzeichnet,**
**daß** Mittel vorgesehen sind, durch welche wahlweise eines der drei Einstellelemente (1, 2, 3) gegen ein Verdrehen arretierbar ist.

6. Vorrichtung nach einem der vorhergehenden Ansprüche,
**gekennzeichnet**
**durch** Mittel zum Einstellen einer Drehwinkellage durch Verdrehen eines Paares von Stirnverzahnungen (5, 7) gegeneinander und anschließendes Verdrehen des anderen Paares von Stirnverzahnungen (9, 11) gegeneinander in entgegengesetzter Richtung.
